(19) Europäisches Patentamt / European Patent Office / Office européen des brevets

(11) **EP 2 111 669 B1**

(12) **FASCICULE DE BREVET EUROPEEN**

(45) Date de publication et mention de la délivrance du brevet:
**10.09.2014 Bulletin 2014/37**

(21) Numéro de dépôt: **08708587.4**

(22) Date de dépôt: **01.02.2008**

(51) Int Cl.:
***H01M 10/42*** *(2006.01)*   ***H01M 10/48*** *(2006.01)*
*H01M 10/052* *(2010.01)*

(86) Numéro de dépôt international:
**PCT/EP2008/051281**

(87) Numéro de publication internationale:
**WO 2008/101787 (28.08.2008 Gazette 2008/35)**

(54) **BATTERIE À MODULES DE CELLULES EN SÉRIE, ET VÉHICULE ÉQUIPÉ DE CELLE-CI**

BATTERIE MIT SERIELLEN ZELLMODULEN UND DAMIT AUSGESTATTETES FAHRZEUG

BATTERY WITH SERIAL CELL MODULES AND VEHICLE EQUIPPED WITH THE SAME

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **06.02.2007 FR 0700826**

(43) Date de publication de la demande:
**28.10.2009 Bulletin 2009/44**

(73) Titulaire: **Blue Solutions**
**29500 Ergué Gabéric (FR)**

(72) Inventeurs:
• **SELLIN, Christian**
**F-29900 Concarneau (FR)**

• **JESTIN, Jean-Jacques**
**F-29170 Fouesnant (FR)**
• **MONFORT, Jean-Luc**
**F-29000 Quimper (FR)**
• **COLIN, Jacques**
**F-29000 Quimper (FR)**

(74) Mandataire: **Regimbeau**
**Espace Performance Bâtiment K**
**35769 St-Grégoire Cedex (FR)**

(56) Documents cités:
**US-A- 5 204 611        US-A- 5 773 962
US-A1- 2005 077 878    US-A1- 2006 028 183**

## Description

L'invention concerne une batterie comportant des cellules rechargeables en série.

Un domaine d'application de l'invention est les batteries de puissance, telles que par exemple celles servant de source d'énergie pour entraîner une chaîne de traction dans les véhicules électriques. Ce type de batterie à bord d'un véhicule électrique possède par exemple des cellules de technologie lithium - métal - polymère.

Bien entendu, la batterie peut avoir d'autres applications, par exemple pour alimenter des appareils fixes.

Les cellules de la batterie peuvent être chargées en connectant celles-ci à un chargeur adapté.

L'appareil consommateur d'énergie, alimenté par la batterie, peut le cas échéant recharger les cellules, comme par exemple dans le cas d'un véhicule électrique en situation de freinage, dans laquelle un courant électrique de régénération est fourni depuis la chaîne de traction à la batterie.

Le document US-A-5,773,962 concerne une batterie ayant une courbe caractéristique de décharge en fonction de l'état de charge, et une courbe caractéristique d'acceptation de charge en régénération en fonction de l'état de charge, et annonce vers l'extérieur à l'utilisateur un avertissement de niveau bas de la batterie, lorsque le courant de décharge dépasse la courbe de décharge.

Le document US-A-5,204,611 concerne un chargeur pour une batterie.

Le US-2005/077878 concerne une batterie selon le préambule de la revendication 1.

Le document US-A-2006/028183 concerne un boîtier contenant plusieurs batteries et un capteur de température pour contrôler un ventilateur.

L'utilisation de la batterie par un appareil consommateur impose de maîtriser les phases de régénération et de décharge.

En effet, lors du fonctionnement de la batterie, une surcharge ou une régénération excessive entraînent une oxydation des produits composant l'électrode positive et l'électrolyte de la batterie. Cette oxydation entraîne une altération de la batterie, se traduisant notamment par une augmentation rapide de la résistance interne. Une surcharge intense et prolongée peut avoir pour conséquence la destruction de la batterie.

Une décharge excessive entraîne une réaction électrochimique parasite au sein du matériau actif de l'électrode positive, ayant pour conséquence une baisse rapide et irrémédiable de la capacité de la batterie. Cette réaction a également pour conséquence une augmentation de la résistance interne.

Ainsi, une régénération et/ou une décharge excessive diminuent sensiblement la durée de vie de la batterie.

En outre, une régénération de la batterie à une température trop basse favorise de manière sensible la formation de dendrites, ce qui entraîne également une diminution de la durée de vie de la batterie.

Une décharge à une température trop basse aura pour conséquence une baisse plus rapide de la tension en raison de la forte résistance interne de la batterie.

L'invention vise à obtenir une batterie permettant de prévenir les décharges excessives et/ou les régénérations excessives lors de son utilisation par un appareil consommateur, afin de préserver la durée de vie de la batterie.

A cet effet, un premier objet de l'invention est une batterie comportant un pack d'une pluralité de modules, contenant chacun une multiplicité de cellules rechargeables en série, la batterie comportant en outre des moyens de mesure de la tension d'au moins une cellule et/ou de la température d'au moins un module, caractérisée en ce qu'elle comporte :

- des moyens de calcul, à partir de la tension et/ou température mesurée par les moyens de mesure et d'une caractéristique enregistrée de courant de décharge et/ou de régénération de la batterie, d'une limite maximum de courant de décharge et/ou de régénération du pack,

- un moyen de transmission vers l'extérieur de l'information de limite maximum de courant de décharge et/ou de régénération du pack.

Dans un mode de réalisation de l'invention, les modules sont en série et les caractéristiques enregistrées de courant des moyens de calcul se rapportent aux modules en série.

Dans un mode de réalisation de l'invention :

➢ la batterie comporte :

- sur chaque module, des moyens de mesure de la tension de plusieurs cellules du module, et/ou
- des moyens de mesure de la température de plusieurs modules, et

➢ les moyens de calcul comportent :

- des premiers moyens de calcul, parmi les tensions et/ou températures mesurées par les moyens de mesure, d'au moins une première grandeur extrémale, choisie parmi :

  - une première tension maximum de cellule,
  - une deuxième tension maximum de module,
  - une troisième tension minimum de cellule,
  - une quatrième tension minimum de module,
  - une cinquième température maximum de module,

- des deuxièmes moyens de calcul, comme limite maximum de courant de décharge et/ou de régénération du pack, d'au moins l'une parmi :

- une valeur maximum autorisée de courant de régénération du pack en fonction de la première et/ou deuxième tension maximum,
- une valeur maximum autorisée de courant de décharge du pack en fonction de la troisième et/ou quatrième tension minimum,
- une valeur maximum admissible de courant de régénération du pack en fonction de la cinquième température maximum de module,
- une valeur maximum admissible de courant de décharge du pack en fonction de la cinquième température maximum de module.

Suivant d'autres caractéristiques de l'invention :

- chaque module comporte les premiers moyens de calcul, l'un des modules est maître, tandis que les autres modules sont esclaves du module maître de manière à lui transmettre ladite au moins une première grandeur extrémale par un réseau de communication reliant les modules entre eux, les deuxièmes moyens de calcul et le moyen de transmission vers l'extérieur étant prévus sur le module maître ;
- la valeur maximum autorisée de courant de régénération est calculée par les deuxièmes moyens, de telle sorte que :

  elle soit égale à une première valeur supérieure de courant de régénération lorsque la deuxième tension maximum de module est inférieure à un premier seuil de tension de module,
  elle soit égale à une deuxième valeur intermédiaire de courant de régénération, lorsqu'à la fois la deuxième tension maximum de module est supérieure ou égale au premier seuil de tension de module et la première tension maximum de cellule est inférieure à un premier seuil de tension de cellule,
  elle soit égale à une troisième valeur inférieure de courant de régénération, lorsqu'à la fois la première tension maximum de cellule est supérieure ou égale au premier seuil de tension de cellule et inférieure à un deuxième seuil de tension de cellule, et la deuxième tension maximum de module est inférieure à un deuxième seuil de tension de module,
  elle soit nulle, lorsque la première tension maximum de cellule est supérieure ou égale au deuxième seuil de tension de cellule ou lorsque la deuxième tension maximum de module est supérieure ou égale au deuxième seuil de tension de module,
  le premier seuil de tension de cellule étant plus petit que le deuxième seuil de tension de cellule, et le premier seuil de tension de module étant plus petit que le deuxième seuil de tension de module ;

- la valeur maximum autorisée de courant de décharge est calculée par les deuxièmes moyens de telle sorte que :

  elle soit égale à une première valeur intermédiaire de courant de décharge, lorsqu'à la fois la quatrième tension minimum de module est supérieure ou égale à un troisième seuil de tension de module et inférieure à un quatrième seuil de tension de module, et la troisième tension minimum de cellule est supérieure ou égale à un troisième seuil de tension de cellule et inférieure à un quatrième seuil de tension de cellule,
  elle soit égale à une deuxième valeur supérieure de courant de décharge, lorsqu'à la fois la troisième tension minimum de cellule est supérieure au quatrième seuil de tension de cellule et la quatrième tension minimum de module est supérieure au quatrième seuil de tension de module ;
  elle soit nulle sinon ;

- la valeur maximum admissible de courant de régénération est calculée par les deuxièmes moyens, de telle sorte que

  elle soit égale à une quatrième valeur supérieure de courant de régénération, lorsque la cinquième température maximum de module est inférieure à un premier seuil de température de module,
  elle soit égale à une fonction décroissante de la cinquième température maximum de module, lorsque la cinquième température maximum de module est supérieure ou égale au premier seuil de température de module et inférieure à un deuxième seuil de température de module, les valeurs de cette fonction étant inférieures ou égales à la quatrième valeur supérieure de courant de régénération et supérieures ou égales à une cinquième valeur inférieure de courant de régénération,
  elle soit égale sinon à la cinquième valeur inférieure de courant de régénération, positive ou nulle ;

- la valeur maximum admissible de courant de décharge est calculée par les deuxièmes moyens, de telle sorte que

  elle soit égale à une quatrième valeur supérieure de courant de décharge, lorsque la cinquième température maximum de module est inférieure à un premier seuil de température de module,
  elle soit égale à une fonction décroissante de la cinquième température maximum de module, lorsque la cinquième température maximum de module est supérieure ou égale au premier seuil de température de module et inférieure à un deuxième seuil de température de module, les valeurs de cette fonction étant inférieures ou égales à la quatrième valeur supérieure de courant de décharge et supérieures ou égales à une cinquième valeur inférieure de courant de décharge,
  elle soit égale sinon à la cinquième valeur inférieure de courant de décharge, positive ou nulle ;

- la fonction décroissante de la cinquième température maximum de module est linéaire ;
- les deuxièmes moyens sont prévus pour calculer, pour le courant de décharge et/ou pour le courant de dégénération, à la fois une valeur maximum autorisée et une valeur maximum admissible, la limite maximum de courant de décharge et/ou de régénération du pack étant la plus grande des deux valeurs maxima autorisée et admissible ;
- la batterie comporte des moyens de mesure de la tension de chaque cellule et/ou des moyens de mesure de la température de chaque module ;
- la batterie comporte des moyens de mesure de la température de module en au moins deux zones différentes du module, la température mesurée du module étant la plus grande des températures de zones du module ;
- le moyen de transmission comprend une interface avec un réseau de communication vers l'extérieur ;
- les cellules sont réalisées par des assemblages de films minces ;
- les cellules ont une température nominale de fonctionnement supérieure à 20 °C ;
- les cellules sont du type lithium - métal - polymère ;

- chaque module comporte en outre au moins un organe de chauffage de ses cellules à leur température nominale de fonctionnement supérieure à 20 °C.

Un deuxième objet de l'invention est un véhicule automobile, comportant une chaîne de traction et au moins une batterie telle que décrite ci-dessus, pour alimenter au moins temporairement la chaîne de traction par de l'énergie électrique, caractérisé en ce que la chaîne de traction comporte un superviseur ayant des moyens de réception de l'information de limite maximum de courant de décharge et/ou de régénération du pack, envoyée par le moyen de transmission de la batterie.

L'invention sera mieux comprise à la lecture de la description qui va suivre, donnée uniquement à titre d'exemple non limitatif en référence aux dessins annexés, sur lesquels :

- la figure 1 représente schématiquement l'interconnexion des modules d'une batterie suivant l'invention,
- la figure 2 représente schématiquement un module de batterie suivant la figure 1,
- la figure 3 est un organigramme du procédé d'acquisition des tensions maximum et minimum de cellule dans un module, suivant l'invention,
- la figure 4 est un organigramme du procédé d'acquisition de la tension maximum de cellule, de la tension minimum de cellule et de la tension maximum de module pour l'ensemble des modules, suivant l'invention,
- la figure 5 est un organigramme du procédé d'adaptation automatique du courant, en fonction de valeurs de tension, suivant l'invention,
- la figure 6 est un graphe d'une valeur maximum autorisée de courant de régénération suivant l'invention,
- la figure 7 est un graphe d'une valeur maximum autorisée de courant de décharge suivant l'invention,
- la figure 8 est un organigramme du procédé d'acquisition de la température maximum des modules suivant l'invention,
- la figure 9 est un organigramme du procédé d'adaptation automatique du courant, en fonction de valeurs de température, suivant l'invention, et
- la figure 10 est un graphe d'une valeur maximum admissible de courant suivant l'invention.

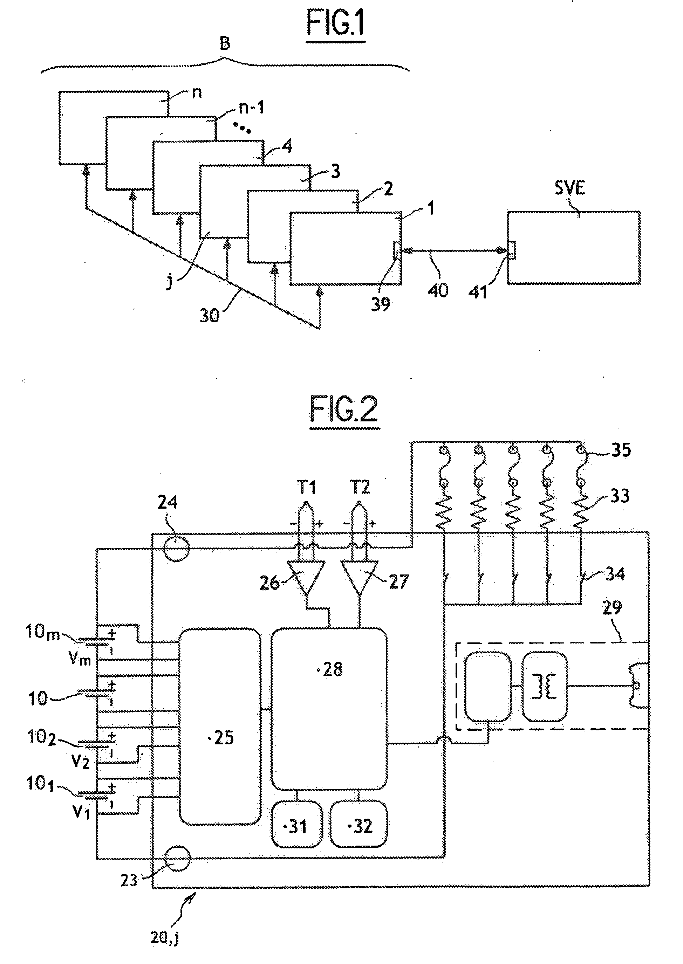

L'invention est décrite ci-dessous en référence au mode de réalisation représenté aux figures, dans lequel les cellules sont réalisées par assemblage de films, par exemple en lithium - métal - polymère. L'épaisseur totale de ces films est par exemple inférieure à 300 micromètres et par exemple de 150 micromètres environ. Les cellules ont une température nominale de fonctionnement supérieure à 20 °C, par exemple de 90 °C pour une technologie lithium - métal - polymère.
Dans la description qui suit, les modules de batterie sont en série. Aux figures, la batterie B comporte n modules 1, 2, 3, 4 ... n-1, n, désignés ci-dessous d'une manière générale par j. Chaque module j comporte le même nombre m de cellules 10 identiques en série, rechargeables et déchargeables, ainsi qu'une unité 20 de contrôle de ses propres cellules 10. A la figure 2, cette unité 20 de contrôle est par exemple sous la forme d'une carte électronique.

L'unité 20 de chaque module j comporte deux bornes 23, 24 connectées aux deux extrémités des cellules 10 associées en série, par lesquelles le courant de décharge provenant des cellules 10 et le courant de régénération arrivant vers les cellules 10 sont fournis. La borne de tension haute 24 d'un module j est reliée par un conducteur de puissance, tel que par exemple une barre métallique de section transversale suffisamment grande, à la borne 23 de tension basse du module suivant j+1, pour une mise en série des modules j et j+1, la batterie comportant deux bornes extérieures, dont l'une est reliée à la borne 23 de tension la plus basse de l'ensemble des modules, et dont l'autre est reliée à la borne 24 de tension la plus haute de l'ensemble des modules, ces deux bornes extérieures étant destinées à être reliées à deux bornes d'un appareil consommateur pour l'alimenter en courant électrique.

Dans le mode de réalisation représenté à la figure 2, chaque module j comporte dans son unité 20 une unité 25 de mesure de la tension aux bornes de chacune de ses cellules 10 associées. En outre, les modules j comportent chacun dans leur unité 20 une ou plusieurs unités 26, 27 de mesure de la température du module en des endroits différents, comme par exemple une unité 26 de mesure de température dans une zone de parois extérieures du module et une unité 27 de mesure de température dans une zone centrale du module. Les mesures de tension et de température des unités 25, 26, 27 sont envoyées à une unité de calcul 28 de l'unité 20, comportant par exemple un microcontrôleur, pour traitement. L'unité 28 est munie d'une mémoire vive 31 et d'une mémoire 32 de sauvegarde. En outre, chaque module j comporte des organes ou plaques 33 de chauffe de ses cellules 10 associées à leur température nominale de fonctionnement, ces plaques 33 de chauffe étant alimentées en courant électrique de chauffage par les bornes 23, 24 en décharge ou en régénération des cellules branchées sur un appareil consommateur. Un interrupteur 34 de chauffe est prévu en série avec chaque organe 33 de chauffe pour pouvoir faire chauffer ou couper sélectivement l'un ou l'autre des organes de chauffe. Un fusible 35 thermique est également prévu en série avec chaque organe 33 de chauffe pour le protéger en cas de température excessive au-dessus de la température nominale de fonctionnement.

Les modules j sont reliés entre eux par un réseau 30 de communication secondaire, interne à la batterie, par exemple du type CAN, c'est-à-dire un réseau de multiplexage. L'un des modules, par exemple le module 1, est maître, chargé de contrôler le réseau secondaire 30 de communication, tandis que les autres modules 2, 3, ..., n-1, n sont esclaves de ce module maître. A cet effet, chacun des modules maître et esclaves comporte une interface 29 de communication avec le réseau secondaire 30.

En outre, le module maître 1 comporte une autre interface 39 avec un réseau primaire 40 de communication avec l'extérieur de la batterie B, par exemple du type CAN. Dans le cas où la batterie B est utilisée par un consommateur électrique formé par une chaîne de traction à bord d'un véhicule automobile électrique ou hybride, un superviseur SVE de cette chaîne de traction comporte également une interface 41 reliée au réseau primaire 40.

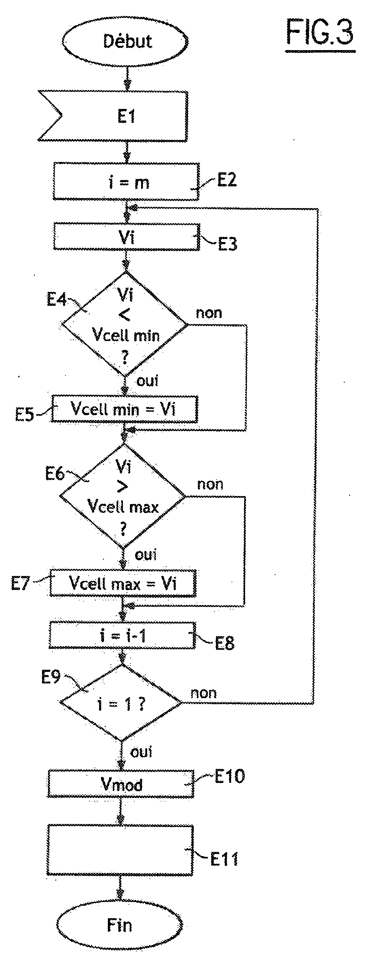

La séparation des deux réseaux de communication, primaire 40 et secondaire 30, peut être considérée d'un point de vue logique ou physique ; en d'autres termes ces deux réseaux peuvent être interconnectés entre eux ou non. Chaque module esclave contrôle l'intégrité de ses mesures avant de les transmettre, via le réseau secondaire 30, au module maître. Dans le mode de réalisation décrit ci-dessous, chaque module esclave 2, 3, 4, ... n-1, n exécute le procédé d'acquisition des tensions représenté à la figure 3.

La batterie comporte des moyens pour calculer une limite maximum de courant de décharge du pack et/ou une limite maximum de courant de régénération du pack, ainsi que cela est décrit ci-dessous. La valeur limite maximum de courant de décharge du pack et/ou la valeur limite maximum de courant de régénération du pack est ou sont transmise(s) par un moyen de transmission vers l'extérieur. L'information ou valeur limite maximum de courant de décharge du pack et/ou de courant de régénération du pack est transmise à l'extérieur pour pouvoir être utilisée à l'extérieur de la batterie, par exemple par un appareil devant être connecté aux bornes 23, 24. Le moyen de transmission utilise par exemple l'interface 39.

A l'étape E1, l'unité 28 du module esclave reçoit un signal d'entrée initiant le démarrage de la scrutation des mesures.

Puis, à l'étape E2, l'indice i de la cellule à scruter est initialisé au nombre m de cellules.

A l'étape E3, l'unité 25 mesure la tension $V_i$ aux bornes de la cellule $10_i$, et envoie cette mesure $V_i$ de tension de cellule à l'unité 28 du module esclave.

Puis, à l'étape E4, l'unité 28 teste si la tension $V_i$ de cellule mesurée à l'étape E3 est inférieure à une tension minimum VcellMin de cellule du module, ayant été au préalable initialisée lors de l'étape E2. Dans l'affirmative à l'étape E4, la tension minimum VcellMin de cellule du module prend la valeur $V_i$ de la tension de cellule mesurée et est mémorisée avec cette valeur $V_i$ à l'étape E5. Dans la négative à l'étape E4, et après l'étape E5, il est passé à l'étape E6.

Au cours de l'étape E6, l'unité 28 du module esclave teste si la tension $V_i$ de cellule mesurée à l'étape E3 est supérieure à une tension maximum VcellMax de cellule du module, ayant été initialisée à l'étape E2. Dans l'affirmative à l'étape E6, cette tension maximum Vcell-Max de cellule du module prend la valeur Vi de la tension de cellule mesurée à l'étape E3 et est mémorisée avec cette valeur Vi à l'étape E7. Dans la négative à l'étape E6 et après l'étape E7, il est passé à l'étape E8, au cours de laquelle l'indice i de la cellule est décrémenté d'une unité.

Puis à l'étape E9, l'unité 28 teste si l'ensemble des m tensions V1, V2, ... Vm des cellules $10_1$, $10_2$, ... $10_m$ a été scruté, c'est-à-dire, si, après l'étape E8, i est égal à 1. Dans la négative à l'étape E9, il est repassé à l'étape E3 de mesure de la tension Vi de la cellule suivante. Dans l'affirmative à l'étape E9, l'unité 28 acquiert la tension Vmod du module à l'étape E10, cette tension de module Vmod étant par exemple égale à la somme des tensions V1, V2, ... Vm des cellules de ce module. Puis, à l'étape E11, l'unité 28 du module esclave envoie la tension minimum VcellMin de cellule du module, la tension maximum VcellMax de cellule du module et la tension Vmod du module au module maître 1 via le réseau de communication secondaire 30. Le module maître 1 exécute des opérations E2 à E10 analogues pour déterminer la tension minimum VcellMin de ses cellules, la tension maximum VcellMax de ses cellules et sa tension VMod de module.

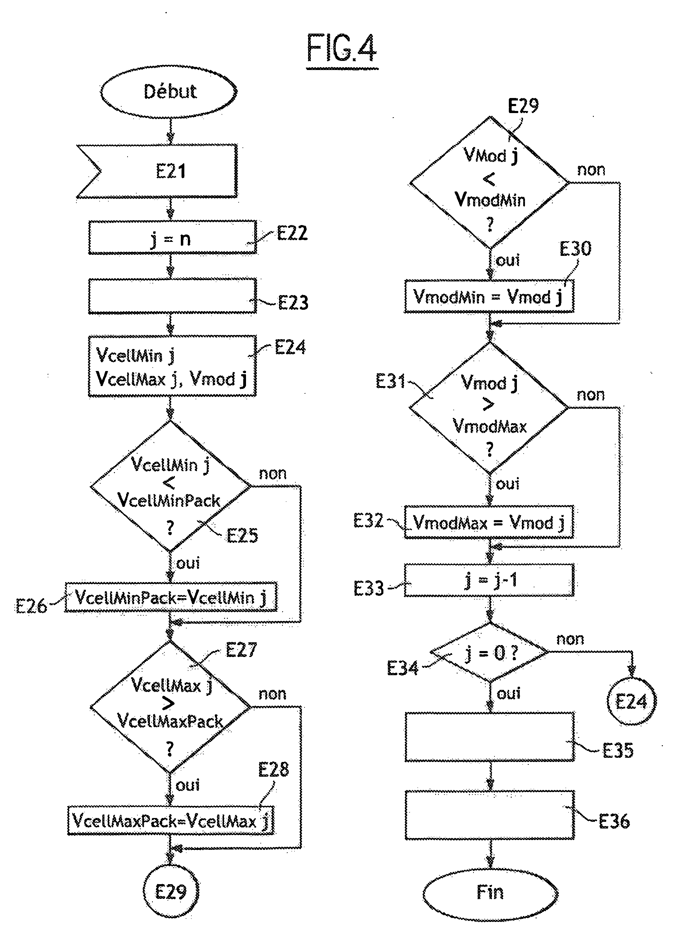

Puis, l'unité 28 du module maître 1 exécute l'algorithme d'acquisition et de tri des tensions suivant la figure 4, afin de calculer une première tension maximum VcellMaxPack de cellule sur l'ensemble des cellules 10 de la batterie, une deuxième tension maximum Vmod-Max de module sur l'ensemble des modules 1,2, ..., n de la batterie, une troisième tension minimum VcellMinPack de cellule sur l'ensemble des cellules 10 de la batterie et une quatrième tension minimum VmodMin de module sur l'ensemble des modules 1, 2, ..., n de la batterie.

A l'étape E21, l'unité 28 du module maître 1 émet sur le réseau 30 le signal d'entrée initiant le démarrage de la scrutation des modules esclaves 2, 3, ..., n selon l'étape E1.

Puis, à l'étape E22, une variable j est initialisée au nombre n de module.

Ensuite, à l'étape E23, le module maître 1 et les modules esclaves 2, ..., n acquièrent les n tensions minimum VcellMin de cellule des modules 1, 2, ..., n, les n tensions maximum VcellMax de cellule des modules 1, 2, ..., n et les n tensions de module Vmod des modules 1, 2, ..., n, qui sont envoyées au module maître 1, conformément à ce qui a été décrit ci-dessus en référence à la figure 3.

Puis, à l'étape E24, les variables VcellMinj, VcellMaxj et Vmodj sont rendues égales à la j-ième tension minimum de cellule VcellMin, à la j-ième tension maximum de cellule VcellMax et à la j-ième tension de module Vmod.

A l'étape E25, l'unité 28 du module maître 1 teste si la variable de tension minimum de cellule Vcell-Minj est inférieure à une tension minimum VcellMinPack de cellule, ayant été initialisée et mémorisée dans le module maître 1 au préalable à l'étape E23. Dans l'affirmative à l'étape E25, la tension minimum VcellMinPack de cellule est rendue égale à la variable VcellMinj lors de l'étape E26 et est mémorisée. Dans la négative à l'étape E25 et après l'étape E26, il est passé à l'étape E27.

Lors de l'étape E27, l'unité 28 du module maître 1 teste si la variable VcellMaxj de tension maximum de cellule est supérieure à une tension maximum VcellMax-Pack de cellule, ayant été initialisée et mémorisée dans le module maître 1 au préalable à l'étape E23. Dans l'affirmative à l'étape E27, la tension maximum VcellMax-Pack de cellule prend la valeur de la variable VcellMaxj et est mémorisée lors de l'étape E28. Dans la négative à l'étape E27 et après l'étape E28, il est passé à l'étape E29.

Lors de l'étape E29, l'unité 28 du module maître 1 teste si la variable Vmodj de tension de module est inférieure à une tension minimum VmodMin de module, ayant été initialisée et mémorisée dans le module maître 1 au préalable lors de l'étape E23.

Dans l'affirmative à l'étape E29, la tension minimum VmodMin de module prend la valeur de la variable Vmodj et est mémorisée à l'étape E30. Dans la négative à l'étape E29 et après l'étape E30, il est passé à l'étape E31.

Lors de l'étape E31, l'unité 28 du module maître 1 teste si la variable Vmodj de tension de module est supérieure à une tension maximum VmodMax de module, ayant été initialisée et mémorisée dans le module maître 1 au préalable lors de l'étape E23. Dans l'affirmative à l'étape E31, la tension maximum VmodMax de module prend la valeur de la variable Vmodj et est mémorisée lors de l'étape E32. Dans la négative à l'étape E31 et après l'étape E32, il est passé à l'étape E33.

Lors de l'étape E33, l'indice j de module est décrémenté d'une unité.

Puis, à l'étape E34, l'unité 28 du module maître 1 teste si l'indice j de module est égal à 0. Dans l'affirmative à l'étape E34, il est passé à l'algorithme E35 de calcul de valeurs de courant, décrit ci-dessous. Dans la négative à l'étape E34, il est retourné à l'étape E24.

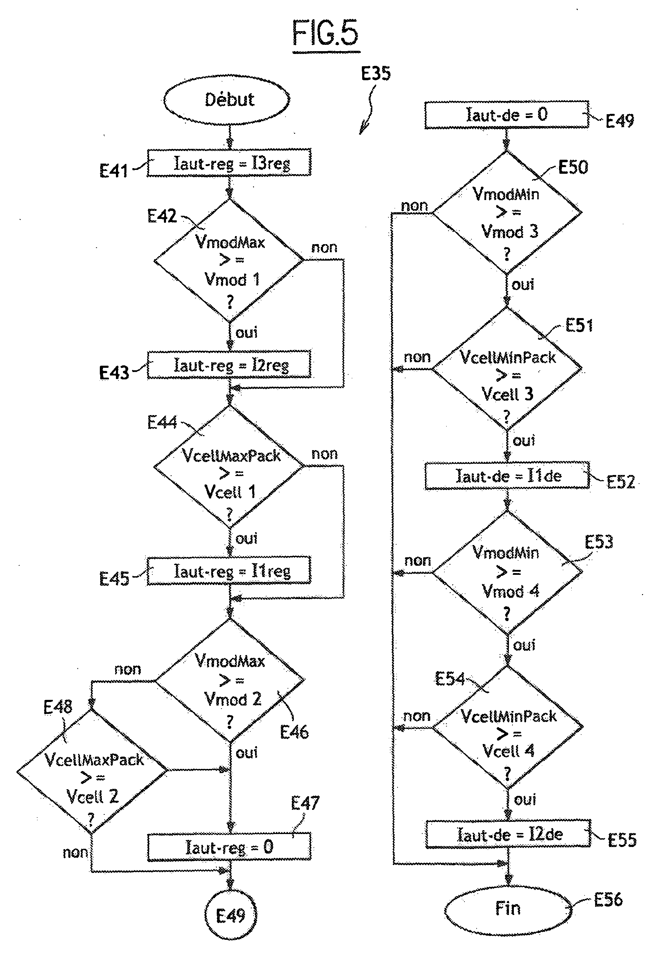

L'algorithme E35 est décrit ci-dessous en référence aux figures 5, 6 et 7.

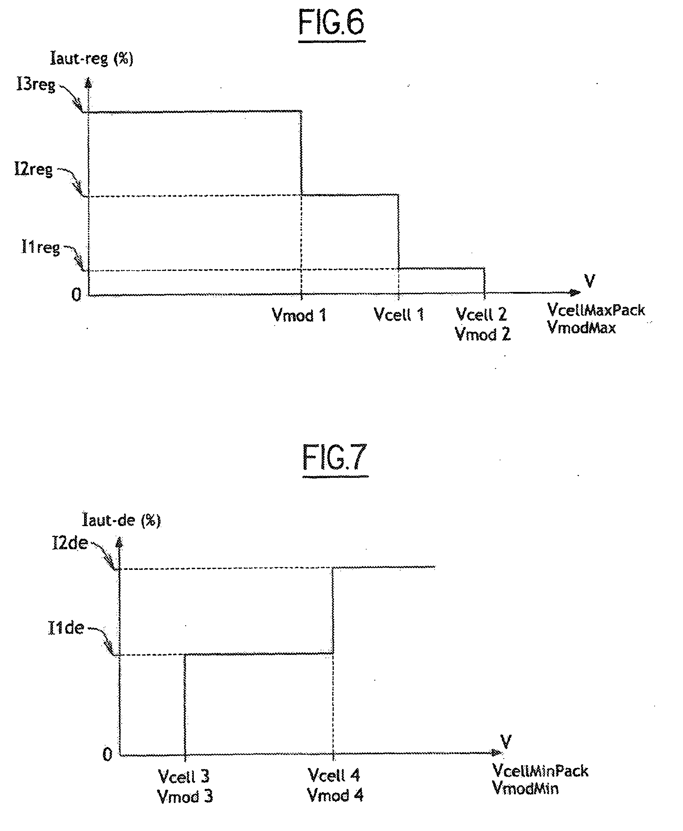

Aux figures 5 et 6, l'unité 28 du module maître 1 calcule une valeur maximum autorisée de courant de régénération Iaut-reg du pack en fonction de la tension maximum de cellule VcellMaxPack et de la tension maximum de module VmodMax. Ce calcul est effectué à partir d'une caractéristique de courant, préenregistrée dans l'unité 28 du module maître 1. Il existe ainsi dans l'unité 28 du module maître 1 une caractéristique préenregistrée de valeur maximum autorisée de courant de régénération, différente d'une caractéristique préenregistrée de valeur maximum autorisée de courant de décharge.

Dans ce qui suit, les caractéristiques de courant sont présentes par exemple sous la forme de fonctions, de graphes ou de tableaux de valeurs. La ou les caractéristiques de courant sont prescrites d'après les paramètres intrinsèques de la batterie, notamment ceux des cellules.

La valeur maximum autorisée de courant de régénération Iaut-reg est initialisée à l'étape E41 à une valeur supérieure prescrite de courant de régénération I3reg.

Puis à l'étape E42, l'unité 28 du module maître 1 teste si la tension maximum de module VmodMax est supérieure ou égale à un premier seuil Vmod1. Dans l'affirmative à l'étape E42, la valeur maximum autorisée de courant de régénération Iaut-reg prend une deuxième valeur intermédiaire prescrite I2reg de courant de régénération à l'étape E43. Dans la négative à l'étape E42 et après l'étape E43, il est passé à l'étape E44.

Lors de l'étape E44, l'unité 28 du module maître 1 teste si la tension maximum de cellule VcellMaxPack est supérieure ou égale à un premier seuil Vcell1 de tension de cellule. Dans l'affirmative à l'étape E44, la valeur maximum autorisée de courant de régénération Iaut-reg prend une valeur inférieure de courant de régénération I1reg à l'étape E45. Dans la négative à l'étape E44 et après l'étape E45, il est passé à l'étape E46.

Lors de l'étape E46, l'unité 28 du module maître 1 teste si la tension maximum de module VmodMax est supérieure ou égale à un deuxième seuil Vmod2 de tension de module. Dans l'affirmative à l'étape E46, la valeur maximum autorisée de courant de régénération Iaut-reg prend une valeur nulle à l'étape E47.

Dans la négative à l'étape E46, il est passé à l'étape E48, lors de laquelle l'unité 28 du module maître 1 teste si la tension maximum de cellule VcellMaxPack est supérieure ou égale à un deuxième seuil Vcell2 de tension de cellule. Dans l'affirmative à l'étape E48, il est passé à l'étape E47. Dans la négative à l'étape E48 et après l'étape E47, il est passé à l'étape E49.

Ainsi que le montre la figure 6, le premier seuil Vmod1 de tension de module est inférieur au deuxième seuil Vmod2 de tension de module. Le premier seuil Vcell1 de tension de cellule est inférieur au deuxième seuil Vcell2 de tension de cellule. L'axe horizontal représente en haut la tension maximum de cellule VcellMaxPack et en bas la tension maximum de module VmodMax.

La valeur inférieure I1reg de courant de régénération est inférieure à la valeur intermédiaire I2reg de courant de régénération, elle-même inférieure à la valeur supérieure I3reg de courant de régénération. L'axe vertical représente la valeur maximum autorisée de courant de régénération Iaut-reg, exprimée en pourcentage. Dans un exemple de réalisation,

n= 10 modules,
m = 12 cellules par module,
I3reg = 100%,
I2reg=50%,
I1reg = 12%
Vcell1 = 3,35 Volts,
Vcell2 = 3,4 Volts,

Vmod1 = 36 Volts,
Vmod2 = 40 Volts.

L'unité 28 du module maître 1 calcule une valeur maximum autorisée Iaut-de de courant de décharge du pack en fonction de la tension minimum de cellule VcellMinPack et de la tension minimum de module VmodMin, ainsi que cela est décrit ci-dessous en référence aux figures 5 et 7.

A l'étape E49, la valeur maximum autorisée de courant de décharge Iaut-de est initialisée à une valeur nulle.

Puis à l'étape E50, l'unité 28 du module maître 1 teste si la tension minimum de module VmodMin est supérieure ou égale à un troisième seuil de tension de module Vmod3.

Dans l'affirmative à l'étape E50, il est passé à l'étape E51, au cours de laquelle l'unité 28 du module maître 1 teste si la tension minimum de cellule VcellMinPack est supérieure ou égale à un troisième seuil Vcell3 de tension de cellule.

Dans l'affirmative à l'étape E51, la valeur maximum autorisée de courant de décharge Iaut-de prend une valeur intermédiaire I1de de courant de décharge à l'étape E52.

Puis, à l'étape E53, l'unité 28 du module maître 1 teste si la tension minimum de module VmodMin est supérieure ou égale à un quatrième seuil Vmod4 de tension de module.

Dans l'affirmative à l'étape E53, il est passé à l'étape E54, au cours de laquelle l'unité 28 du module maître 1 teste si la tension minimum de cellule VcellMinPack est supérieure ou égale à un quatrième seuil Vcell4 de tension de cellule.

Dans l'affirmative à l'étape E54, la valeur maximum autorisée de courant de décharge Iaut-de prend une valeur supérieure I2de à l'étape E55. Dans la négative aux étapes E50, E51, E53, E54, et après l'étape E55, il est passé à une étape E56 de fin.

A la figure 7, l'axe horizontal représente, en haut la tension minimum de cellule VcellMinPack, et en bas la tension minimum de module VmodMin. Le troisième seuil Vcell3 de tension de cellule est inférieur au quatrième seuil Vcell4 de tension de cellule. Le troisième seuil Vmod3 de tension de module est inférieur au quatrième seuil Vmod4 de tension de module. Pour VcellMaxPack = Vcell4 et VmodMax = Vmod4, Iaut-reg = I3reg, ainsi que cela est représenté à la figure 6.

L'axe vertical représente la valeur maximum autorisée de courant de décharge Iaut-de, en pourcentage. La valeur intermédiaire I1de de courant de décharge est supérieure à 0 et inférieure à la valeur supérieure I2de de courant de décharge. Dans un exemple de réalisation,

n= 10 modules,
m = 12 cellules par module,
I2de = 100%,

I1de = 50%,
Vcell3 = 1,8 Volts,
Vcell4 = 2,2 Volts,
Vmod3 = 21 Volts,
Vmod4 = 30 Volts.

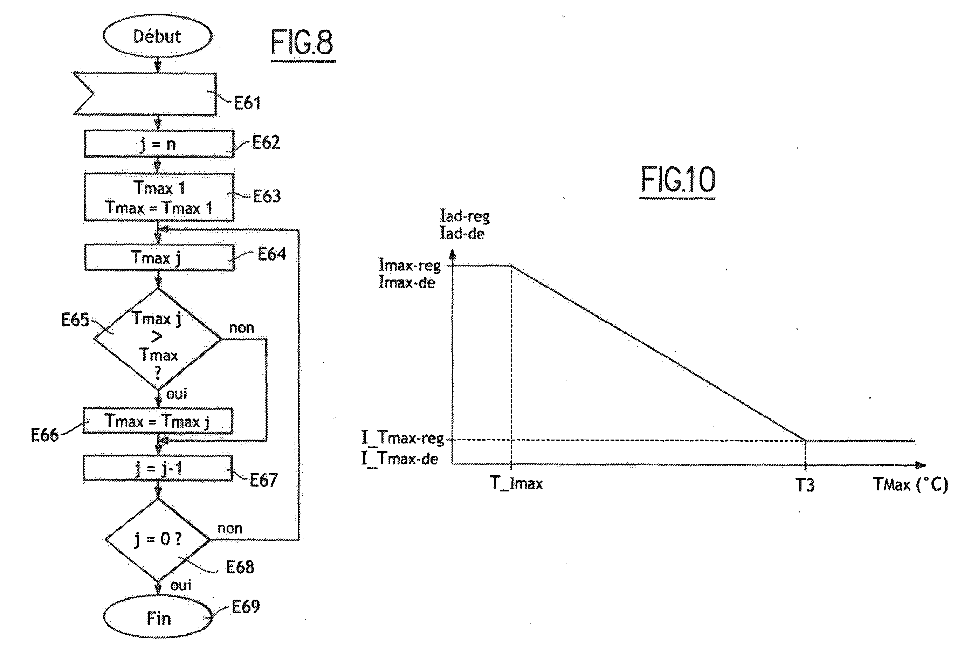

Le module maître 1 exécute également un algorithme d'acquisition et de tri des températures, qui est écrit ci-dessous en référence à la figure 8.

A l'étape E61, l'unité 28 du module maître émet un signal d'entrée initiant le démarrage de la scrutation des modules esclaves.

Puis, à l'étape E62, le nombre j de module à scruter est initialisé à n.

A l'étape suivante E63, l'unité 28 du module maître 1 acquiert la température maximum Tmax à partir des informations fournies par ses unités 26, 27 de mesure de température T1 et T2. La température maximum Tmax de module est initialisée à la température Tmax1 du module maître 1 et est mémorisée par celui-ci.

Puis, à l'étape E64, la température maximum Tmaxj du module esclave j est acquise par l'unité 28 de celui-ci et est envoyée via le réseau secondaire 30 de communication à celle du module mètre 1.

Ensuite, à l'étape E65, l'unité 28 du module maître 1 teste si la température maximum Tmaxj du module j est supérieure à la température maximum TMax. Dans l'affirmative à l'étape E65, la température maximum TMax prend la valeur de la température maximum Tmaxj du module j et est mémorisée à l'étape E66. Dans la négative à l'étape E65 et après l'étape E66, il est passé à l'étape E67, au cours de laquelle l'indice j de module est décrémenté d'une unité.

Puis, à l'étape E68, l'unité 28 du module maître teste si l'ensemble des modules a été scruté, c'est-à-dire si l'indice j est égal à 0. Dans l'affirmative à l'étape E68, il est passé à l'étape E69 de fin. Dans la négative à l'étape E68, il est retourné à l'étape E64.

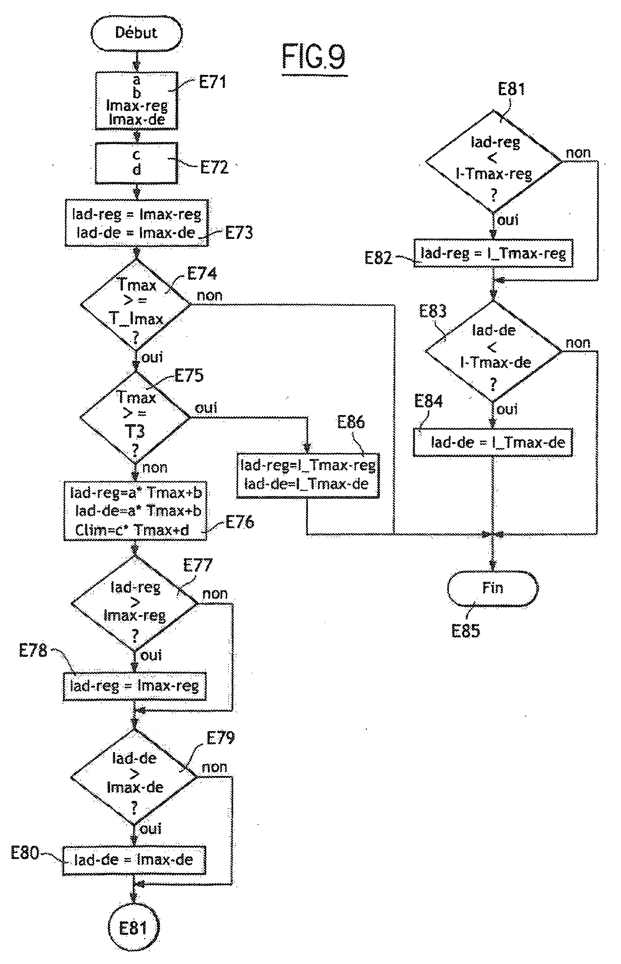

L'unité 28 du module maître 1 calcule ensuite sur la base de caractéristiques préenregistrées de courant une valeur maximum admissible Iad-reg de courant de régénération et une valeur maximum admissible Iad-de de courant de décharge en fonction de la température maximum TMax de module. A cet effet, il existe une caractéristique préenregistrée de valeur maximum admissible de courant de décharge et une caractéristique préenregistrée de valeur maximum admissible de courant de régénération, ainsi que cela est décrit ci-dessous à titre d'exemple en référence aux figures 9 et 10. Ces caractéristiques de valeur maximum admissible de courant de décharge et de valeur maximum admissible de courant de régénération sont par exemple des fonctions décroissantes et continues de la température maximum TMax de module.

A la figure 10, le graphe de ces valeurs maximum admissibles Iad-reg et Iad-de de courant de régénération et de courant de décharge possède, du premier seuil T_Imax de température au deuxième seuil T3 de température, une forme linéaire = a.TMax + b. En dessous de et au premier seuil de température T_Imax, les valeurs maxima admissibles Iad-reg de courant de régénération et Iad-de de courant de décharge sont égales respectivement à une quatrième valeur supérieure Imax-reg de courant de régénération et à une quatrième valeur supérieure Imax-de de courant de décharge. Au-dessus de et au deuxième seuil T3 de température, les valeurs maxima admissibles Iad-reg de courant de régénération et Iad-de de courant de décharge sont égales respectivement à une cinquième valeur inférieure I_Tmax-reg de courant de régénération et à une cinquième valeur inférieure I_Tmax-de de courant de décharge.

A la figure 9, les coefficients a, b et les deuxièmes valeurs supérieures Imax-reg et Imax-de sont initialisées à l'étape E71.

Puis, à l'étape E72, ce sont deux coefficients c et d, intervenant dans le calcul d'un coefficient Clim de limitation de courant, qui sont initialisés. D'une manière générale, d/c = b/a.

Ensuite, à l'étape E73, la valeur maximum admissible Iad-reg de courant de régénération est initialisée à la quatrième valeur supérieure Imax-reg, et la valeur maximum admissible Iad-de de courant de décharge est initialisé à la quatrième valeur supérieure Imax-de.

Puis, à l'étape E74, l'unité 28 du module maître 1 teste si la température maximum TMax de module est supérieure ou égale au premier seuil T_Imax de température.

Dans l'affirmative à l'étape E74, l'unité 28 du module maître passe à l'étape E75.

A l'étape E75, l'unité 28 du module maître 1 teste si la température maximum TMax de module est supérieure ou égale au deuxième seuil T3 de température.

Dans la négative à l'étape E75, l'unité 28 du module maître passe à l'étape E76.

A l'étape E76, l'unité 28 du module maître calcule :

- la valeur maximum admissible Iad-reg de courant de régénération selon la formule :

$$Iad\text{-}reg = a*Tmax + b,$$

- la valeur maximum admissible Iad-de de courant de décharge selon la formule :

$$Iad\text{-}de = a*Tmax + b, \text{ et}$$

- le coefficient Clim de limitation de courant selon la formule :

$$Clim = c*Tmax + d.$$

Les coefficients a et b sont prescrits pour des valeurs supérieures Imax-reg et Imax-de déterminées, par exemple égales.

Dans un exemple de réalisation, pour Imax-reg = Imax-de = 230 A, a = -21 et b = 2330, les températures étant exprimées en °C.

Le coefficient de limitation Clim correspond à une valeur supérieure Imax-reg = Imax-de = 1 A et correspond, dans l'exemple de réalisation ci-dessus à :

c = 0,0913
d = 10,13.

Après l'étape E76, l'unité 28 du module maître 1 teste à l'étape E77 si la valeur maximum admissible Iad-reg de courant de régénération est supérieure à la quatrième valeur Imax-reg. Dans l'affirmative à l'étape E77, la valeur maximum admissible Iad-reg du courant de régénération est rendue égale à la quatrième valeur supérieure Imax-reg à l'étape E78. Dans la négative à l'étape E77 et après l'étape E78, il est passé à l'étape E79.

Lors de l'étape E79, l'unité 28 du module maître 1 teste si la valeur maximum admissible Iad-de de courant de décharge est supérieure à la quatrième valeur supérieure Imax-de. Dans l'affirmative à l'étape E79, la valeur maximum admissible de courant de décharge Iad-de est rendu égale à la quatrième valeur supérieure Imax-de à l'étape E80. Dans la négative à l'étape E79 et après l'étape E80, il est passé à l'étape E81.

Lors de l'étape E81, l'unité 28 du module maître 1 teste si la valeur maximum admissible Iad-reg du courant de régénération est inférieure à la cinquième valeur inférieure I_Tmax-reg de courant de régénération. Dans l'affirmative à l'étape E81, la valeur maximum admissible Iad-reg du courant de régénération est rendue égale à la cinquième valeur inférieure I_Tmax-reg de courant de régénération lors de l'étape E82. Dans la négative à l'étape E81 et après l'étape E82, il est passé à l'étape E83.

Lors de l'étape E83, l'unité 28 du module maître 1 teste si la valeur maximum admissible Iad-de du courant de décharge est inférieure à la cinquième valeur inférieure I_Tmax-de de courant de décharge. Dans l'affirmative à l'étape E83, la valeur maximum admissible Iad-de du courant de décharge est rendue égale à la cinquième valeur inférieure I_Tmax-de de courant de décharge lors de l'étape E84. Dans la négative à l'étape E83 et après l'étape E84, il est passé à l'étape E85 de fin.

Egalement, dans la négative à l'étape E74, il est passé à l'étape E85 de fin.

Dans l'affirmative à l'étape E75, il est passé à l'étape E86, lors de laquelle la valeur maximum admissible Iad-reg du courant de régénération est rendue égale à la cinquième valeur inférieure I_Tmax-reg de courant de régénération, et la valeur maximum admissible Iad-de du courant de décharge est rendue égale à la cinquième valeur inférieure I_Tmax-de de courant de décharge.

Bien entendu, le module maître 1 peut calculer, pour le courant de régénération, uniquement la valeur maximum autorisée Iaut-reg, ou uniquement la valeur maximum admissible Iad-reg, cette valeur maximum formant alors la limite maximum de courant de régénération. De même, le module maître 1 peut calculer, pour le courant de décharge, uniquement la valeur maximum autorisée Iaut-de ou uniquement la valeur maximum admissible Iad-de, cette valeur maximum formant alors la limite maximum de courant de décharge.

Lorsqu'il est calculé pour le courant de régénération, à la fois la valeur maximum autorisée Iaut-reg et la valeur maximum admissible Iad-reg, l'unité 28 du module maître 1 détermine la limite maximum de courant de régénération comme étant la plus grande des deux valeurs maxima Iaut-reg, Iad-reg.

Lorsqu'il est calculé pour le courant de décharge, à la fois la valeur maximum autorisée Iaut-de et la valeur maximum admissible Iad-de, l'unité 28 du module maître 1 détermine la limite maximum de courant de décharge comme étant la plus grande des deux valeurs maxima Iaut-de, Iad-de.

L'unité 28 du module maître 1 fournit la limite maximum de courant de régénération, égale à la valeur maximum autorisée Iaut-reg ou à la valeur maximum admissible Iad-de, et la limite maximum de courant de décharge, égale à la valeur maximum autorisée Iaut-de ou à la valeur maximum admissible Iad-de.

La limite maximum de courant de régénération et la limite maximum de courant de décharge sont envoyées à l'étape E36 par l'unité 28 du module maître 1 à l'interface 39, pour être des informations disponibles à l'extérieur de la batterie. Ces limites maxima de courant de régénération et de courant de décharge sont par exemple acheminées par l'interface 39 sur le réseau primaire 40 de communication au superviseur SVE.

## Revendications

1. Batterie comportant un pack d'une pluralité de modules, contenant chacun une multiplicité de cellules (10) rechargeables en série, la batterie comportant en outre des moyens (25, 26, 27) de mesure de la tension d'au moins une cellule (10) et/ou de la température d'au moins un module,
**caractérisée en ce qu'**elle comporte :

- des moyens de calcul, à partir de la tension et/ou température mesurée par les moyens (25, 26, 27) de mesure et d'une caractéristique enregistrée de courant de décharge et/ou de régénération de la batterie, d'une limite maximum (Iaut-reg, Iad-reg ; Iaut-de, Iad-de) de courant de décharge et/ou de régénération du pack,
- un moyen de transmission vers l'extérieur de l'information de limite maximum (Iaut-reg, Iad-reg ; Iaut-de, Iad-de) de courant de décharge et/ou de régénération du pack.

**2.** Batterie suivant la revendication 1, **caractérisée en ce que** les modules sont en série et les caractéristiques enregistrées de courant des moyens de calcul se rapportent aux modules en série.

**3.** Batterie suivant l'une quelconque des revendications précédentes, **caractérisée en ce que**

➢ la batterie comporte :

• sur chaque module, des moyens (25) de mesure de la tension de plusieurs cellules du module, et/ou
• des moyens (26, 27) de mesure de la température de plusieurs modules, et

➢ les moyens de calcul comportent :

• des premiers moyens de calcul, parmi les tensions et/ou températures mesurées par les moyens de mesuré, d'au moins une première grandeur extrémale, choisie parmi :

- une première tension maximum (VcellMaxPack) de cellule,
- une deuxième tension maximum (VmodMax) de module,
- une troisième tension minimum (VcellMinPack) de cellule,
- une quatrième tension minimum (VmodMin) de module,
- une cinquième température maximum (TMax) de module,

• des deuxièmes moyens de calcul, comme limite maximum (Iaut-reg, Iad-reg ; Iaut-de, Iad-de) de courant de décharge et/ou de régénération du pack, d'au moins l'une parmi :

- une valeur maximum autorisée (Iaut-reg) de courant de régénération du pack en fonction de la première et/ou deuxième tension maximum (VcellMaxPack, VmodMax),
- une valeur maximum autorisée (Iaut-de) de courant de décharge du pack en fonction de la troisième et/ou quatrième tension minimum (VcellMinPack, VmodMin),
- une valeur maximum admissible (Iad-reg) de courant de régénération du pack en fonction de la cinquième température maximum (TMax) de module,
- une valeur maximum admissible (Iad-de) de courant de décharge du pack en fonction de la cinquième température maximum (TMax) de module.

**4.** Batterie suivant la revendication 3, **caractérisée en ce que** chaque module (j) comporte les premiers moyens de calcul, l'un des modules est maître (1), tandis que les autres modules sont esclaves du module maître (1) de manière à lui transmettre ladite au moins une première grandeur extrémale par un réseau (30) de communication reliant les modules (j) entre eux, les deuxièmes moyens de calcul et le moyen de transmission vers l'extérieur étant prévus sur le module maître (1).

**5.** Batterie suivant l'une quelconque des revendications 3 et 4, **caractérisée en ce que** la valeur maximum autorisée (Iaut-reg) de courant de régénération est calculée par les deuxièmes moyens, de telle sorte que :

- elle soit égale à une première valeur supérieure (I3reg) de courant de régénération lorsque la deuxième tension maximum (VmodMax) de module est inférieure à un premier seuil (Vmod1) de tension de module,
- elle soit égale à une deuxième valeur intermédiaire (I2reg) de courant de régénération, lorsqu'à la fois la deuxième tension maximum (VmodMax) de module est supérieure ou égale au premier seuil (Vmod1) de tension de module et la première tension maximum (VcellMaxPack) de cellule est inférieure à un premier seuil (Vcell1) de tension de cellule,
- elle soit égale à une troisième valeur inférieure (I1reg) de courant de régénération, lorsqu'à la fois la première tension maximum (VcellMaxPack) de cellule est supérieure ou égale au premier seuil (Vcell1) de tension de cellule et inférieure à un deuxième seuil (Vcell2) de tension de cellule, et la deuxième tension maximum (VmodMax) de module est inférieure à un deuxième seuil (Vmod2) de tension de module,
- elle soit nulle, lorsque la première tension maximum (VcellMaxPack) de cellule est supérieure ou égale au deuxième seuil (Vcell2) de tension de cellule ou lorsque la deuxième tension maximum (VmodMax) de module est supérieure ou égale au deuxième seuil (Vmod2) de tension de module,
le premier seuil (Vcell1) de tension de cellule étant plus petit que le deuxième seuil (Vcell2) de tension de cellule, et le premier seuil (Vmod1) de tension de module étant plus petit que le deuxième seuil (Vmod2) de tension de module.

**6.** Batterie suivant l'une quelconque des revendications 3 à 5, **caractérisée en ce que** la valeur maximum autorisée (Iaut-de) de courant de décharge est calculée par les deuxièmes moyens de telle sorte que :

- elle soit égale à une première valeur intermédiaire (I1de) de courant de décharge, lorsqu'à la fois la quatrième tension minimum (VmodMin) de module est supérieure ou égale à un troisième seuil (Vmod3) de tension de module et inférieure à un quatrième seuil (Vmod4) de tension de module, et la troisième tension minimum (VcellMinPack) de cellule est supérieure ou égale à un troisième seuil (Vcell3) de tension de cellule et inférieure à un quatrième seuil (Vcell4) de tension de cellule,

- elle soit égale à une deuxième valeur supérieure (I2de) de courant de décharge, lorsqu'à la fois la troisième tension minimum (VcellMinPack) de cellule est supérieure au quatrième seuil (Vcell4) de tension de cellule et la quatrième tension minimum (VmodMin) de module est supérieure au quatrième seuil (Vmod4) de tension de module,

- elle soit nulle sinon.

7. Batterie suivant l'une quelconque des revendications 3 à 6, **caractérisée en ce que** la valeur maximum admissible (Iad-reg) de courant de régénération est calculée par les deuxièmes moyens, de telle sorte que

 - elle soit égale à une quatrième valeur supérieure (Imax-reg) de courant de régénération, lorsque la cinquième température maximum (TMax) de module est inférieure à un premier seuil (T_Imax) de température de module,
 - elle soit égale à une fonction décroissante de la cinquième température maximum de module, lorsque la cinquième température maximum (TMax) de module est supérieure ou égale au premier seuil (T_Imax) de température de module et inférieure à un deuxième seuil (T3) de température de module, les valeurs de cette fonction étant inférieures ou égales à la quatrième valeur supérieure (Imax-reg) de courant de régénération et supérieures ou égales à une cinquième valeur inférieure (I_Tmax-reg) de courant de régénération,
 - elle soit égale sinon à la cinquième valeur inférieure (I_Tmax-reg) de courant de régénération, positive ou nulle.

8. Batterie suivant l'une quelconque des revendications 3 à 7, **caractérisée en ce que** la valeur maximum admissible (Iad-de) de courant de décharge est calculée par les deuxièmes moyens, de telle sorte que

 - elle soit égale à une quatrième valeur supérieure (Imax-de) de courant de décharge, lorsque la cinquième température maximum (TMax) de module est inférieure à un premier seuil (T_Imax) de température de module,
- elle soit égale à une fonction décroissante de la cinquième température maximum de module, lorsque la cinquième température maximum (TMax) de module est supérieure ou égale au premier seuil (T_Imax) de température de module et inférieure à un deuxième seuil (T3) de température de module, les valeurs de cette fonction étant inférieures ou égales à la quatrième valeur supérieure (Imax-de) de courant de décharge et supérieures ou égales à une cinquième valeur inférieure (I_Tmax-de) de courant de décharge,
- elle soit égale sinon à la cinquième valeur inférieure (I_Tmax-de) de courant de décharge, positive ou nulle.

9. Batterie suivant l'une quelconque des revendications 7 et 8, **caractérisée en ce que** la fonction décroissante de la cinquième température maximum de module est linéaire.

10. Batterie suivant l'une quelconque des revendications 3 à 9, **caractérisée en ce que** les deuxièmes moyens sont prévus pour calculer, pour le courant de décharge et/ou pour le courant de dégénération, à la fois une valeur maximum autorisée (Iaut-reg ; Iaut-de) et une valeur maximum admissible (Iad-reg ; Iad-de),

la limite maximum (Iaut-reg, Iad-reg ; Iaut-de, Iad-de) de courant de décharge et/ou de régénération du pack étant la plus grande des deux valeurs maxima autorisée et admissible.

11. Batterie suivant l'une quelconque des revendications précédentes, **caractérisée en ce qu'**elle comporte des moyens (25) de mesure de la tension de chaque cellule et/ou des moyens (26, 27) de mesure de la température de chaque module.

12. Batterie suivant l'une quelconque des revendications précédentes, **caractérisée en ce qu'**elle comporte des moyens (26, 27) de mesure de la température de module en au moins deux zones différentes du module, la température mesurée du module étant la plus grande des températures (T1, T2) de zones du module.

13. Batterie suivant l'une quelconque des revendications précédentes, **caractérisée en ce que** le moyen de transmission comprend une interface (39) avec un réseau (40) de communication vers l'extérieur.

14. Batterie suivant l'une quelconque des revendications précédentes, **caractérisée en ce que** les cellules sont réalisées par des assemblages de films minces.

**15.** Batterie suivant l'une quelconque des revendications précédentes, **caractérisée en ce que** les cellules ont une température nominale de fonctionnement supérieure à 20 °C.

**16.** Batterie suivant l'une quelconque des revendications précédentes, **caractérisée en ce que** les cellules sont du type lithium - métal - polymère.

**17.** Batterie suivant l'une quelconque des revendications précédentes, **caractérisée en ce que** chaque module comporte en outre au moins un organe (33) de chauffage de ses cellules à leur température nominale de fonctionnement supérieure à 20 °C.

**18.** Véhicule automobile, comportant une chaîne de traction et au moins une batterie suivant l'une quelconque des revendications précédentes, pour alimenter au moins temporairement la chaîne de traction par de l'énergie électrique, **caractérisé en ce que** la chaîne de traction comporte un superviseur (SVE) ayant des moyens (40, 41) de réception de l'information de limite maximum (Iaut-reg, Iad-reg ; Iaut-de, Iad-de) de courant de décharge et/ou de régénération du pack, envoyée par le moyen de transmission de la batterie.

**Patentansprüche**

**1.** Batterie mit einem Paket aus einer Mehrzahl von Modulen, die jeweils eine Vielzahl von in Reihe geschalteten wiederaufladbaren Zellen (10) umfassen, wobei die Batterie ferner Mittel (25, 26, 27) zum Messen der Spannung mindestens einer Zelle (10) und/oder der Temperatur mindestens eines Moduls aufweist, **dadurch gekennzeichnet, dass** sie Folgendes aufweist:

    - Mittel zum Berechnen, ausgehend von der durch die Messmittel (25, 26, 27) gemessenen Spannung und/oder Temperatur und einer aufgezeichneten Kennlinie für den Entlade- und/oder Regenerationsstrom der Batterie, eines maximalen Grenzwerts (Iaut-reg, Iad-reg ; Iaut-de, Iad-de) für den Entlade- und/oder den Regenerationsstrom des Pakets,
    - ein Mittel zum Übertragen der Information über den maximalen Grenzwert (Iaut-reg, Iad-reg ; Iaut-de, Iad-de) für den Entlade- und/oder den Regenerationsstrom des Pakets nach außen.

**2.** Batterie nach Anspruch 1, **dadurch gekennzeichnet, dass** die Module in Reihe geschaltet sind und die aufgezeichneten Stromkennlinien der Berechnungsmittel sich auf die in Reihe geschalteten Module beziehen.

**3.** Batterie nach einem der vorhergehenden Ansprüche, **dadurch gekennzeichnet, dass**

    ➢ die Batterie Folgendes aufweist:

        • an jedem Modul Mittel (25) zum Messen der Spannung von mehreren Zellen des Moduls und/oder
        • Mittel (26, 27) zum Messen der Temperatur von mehreren Modulen, und

    ➢ die Berechnungsmittel Folgendes aufweisen:

        • erste Mittel zum Berechnen, aus den durch die Messmittel gemessenen Spannungen und/oder Temperaturen, mindestens einer ersten Grenzgröße, die ausgewählt ist aus

            - einer ersten Höchstspannung (VcellMaxPack) der Zelle,
            - einer zweiten Höchstspannung (VmodMax) des Moduls,
            - einer dritten Mindestspannung (VcellMinPack) der Zelle,
            - einer vierten Mindestspannung (VmodMin) des Moduls,
            - einer fünften Höchsttemperatur (TMax) des Moduls,

        • zweite Mittel zum Berechnen, als maximalen Grenzwert(Iaut-reg, Iad-reg ; Iaut-de, Iad-de) für den Entlade- und/oder den Regenerationsstrom des Pakets, mindestens eines aus

            - einem maximal zugelassenen Wert (Iaut-reg) für den Regenerationsstrom des Pakets in Abhängigkeit von der ersten und/oder zweiten Höchstspannung (VcellMaxPack, VmodMax),
            - einem maximal zugelassenen Wert (Iaut-de) für den Entladestrom des Pakets in Abhängigkeit von der dritten und/oder vierten Mindestspannung (VcellMinPack, VmodMin),
            - einem maximal zulässigen Wert (Iad-reg) für den Regenerationsstrom des Pakets in Abhängigkeit von der fünften Höchsttemperatur (TMax) des Moduls,
            - einem maximal zulässigen Wert (Iad-de) für den Entladestrom des Pakets in Abhängigkeit von der fünften Höchsttemperatur (TMax) des Moduls.

**4.** Batterie nach Anspruch 3, **dadurch gekennzeichnet, dass** jedes Modul (j) die ersten Berechnungsmittel aufweist, wobei das eine der Module Master (1) ist, während die anderen Module Slaves des Master-Moduls (1) sind, derart, dass sie ihm die mindestens eine erste Grenzgröße über ein Kommunikationsnetz (30) übertragen, das die Module (j) miteinander verbindet, wobei die zweiten Berechnungsmittel und das Mittel zum Übertragen nach außen an dem Master-Modul (1) vorgesehen sind.

5. Batterie nach einem der Ansprüche 3 und 4, **dadurch gekennzeichnet, dass** der maximal zugelassene Wert (Iaut-reg) für den Regenerationsstrom durch die zweiten Mittel berechnet wird, derart, dass

   - er gleich einem ersten oberen Wert (I3reg) für den Regenerationsstrom ist, wenn die zweite Höchstspannung (VmodMax) des Moduls kleiner als ein erster Schwellwert (Vmod1) der Modulspannung ist,
   - er gleich einem zweiten Zwischenwert (I3reg) für den Regenerationsstrom ist, wenn gleichzeitig die zweite Höchstspannung (VmodMax) des Moduls größer oder gleich dem ersten Schwellwert (Vmod1) der Modulspannung ist und die erste Höchstspannung (VcellMaxPack) der Zelle kleiner als ein erster Schwellwert (Vcell1) der Zellspannung ist,
   - er gleich einem dritten unteren Wert (I1reg) für den Regenerationsstrom ist, wenn gleichzeitig die erste Höchstspannung (VcellMaxPack) der Zelle größer oder gleich dem ersten Schwellwert (Vcell1) der Zellspannung und kleiner als ein zweiter Schwellwert (Vcell2) der Zellspannung ist und die zweite Höchstspannung (VmodMax) des Moduls kleiner als ein zweiter Schwellwert (Vmod2) der Modulspannung ist,
   - er gleich Null ist, wenn die erste Höchstspannung (VcellMaxPack) der Zelle größer oder gleich dem zweiten Schwellwert (Vcell2) der Zellspannung ist oder wenn die zweite Höchstspannung (VmodMax) des Moduls größer oder gleich dem zweiten Schwellwert (Vmod2) der Modulspannung ist,

   wobei der erste Schwellwert (Vcell1) der Zellspannung kleiner als der zweite Schwellwert (Vcell2) der Zellspannung ist und wobei der erste Schwellwert (Vmod1) der Modulspannung kleiner als der zweite Schwellwert (Vmod2) der Modulspannung ist.

6. Batterie nach einem der Ansprüche 3 bis 5, **dadurch gekennzeichnet, dass** der maximal zugelassene Wert (Iaut-de) für den Entladestrom durch die zweiten Mittel berechnet wird, derart, dass

   - er gleich einem ersten Zwischenwert (I1de) für den Entladestrom ist, wenn gleichzeitig die vierte Mindestspannung (VmodMin) des Moduls größer oder gleich dem dritten Schwellwert (Vmod3) der Modulspannung und kleiner als ein vierter Schwellwert (Vmod4) der Modulspannung ist und die dritte Mindestspannung (VcellMinPack) der Zelle größer oder gleich einem dritten Schwellwert (Vcell3) der Zellspannung und kleiner als ein vierter Schwellwert (Vcell4) der Zellspannung ist,
   - er gleich einem zweiten oberen Wert (I2de) für den Entladestrom ist, wenn gleichzeitig die dritte Mindestspannung (VcellMinPack) der Zelle größer als der vierte Schwellwert (Vcell4) der Zellspannung ist und die vierte Mindestspannung (VmodMin) des Moduls größer als der vierte Schwellwert (Vmod4) der Modulspannung ist,
   - er andernfalls gleich Null ist.

7. Batterie nach einem der Ansprüche 3 bis 6, **dadurch gekennzeichnet, dass** der maximal zulässige Wert (Iad-reg) für den Regenerationsstrom durch die zweiten Mittel berechnet wird, derart, dass

   - er gleich einem vierten oberen Wert (Imax-reg) für den Regenerationsstrom ist, wenn die fünfte Höchsttemperatur (TMax) des Moduls kleiner als ein erster Schwellwert (T_Imax) der Modultemperatur ist,
   - er gleich einer abnehmenden Funktion der fünften Höchsttemperatur des Moduls ist, wenn die fünfte Höchsttemperatur (TMax) des Moduls größer oder gleich dem ersten Schwellwert (T_Imax) der Modultemperatur und kleiner als ein zweiter Schwellwert (T3) der Modultemperatur ist, wobei die Werte dieser Funktion kleiner oder gleich dem vierten oberen Wert (Imax-reg) für den Regenerationsstrom und größer oder gleich einem fünften unteren Wert (I_Tmax-reg) für den Regenerationsstrom sind,
   - er andernfalls gleich dem fünften unteren Wert (I_Tmax-reg) für den Regenerationsstrom, positiv oder Null ist.

8. Batterie nach einem der Ansprüche 3 bis 7, **dadurch gekennzeichnet, dass** der maximal zulässige Wert (Iad-de) für den Endladestrom durch die zweiten Mittel berechnet wird, derart, dass

   - er gleich einem vierten oberen Wert (Imax-de) für den Endladestrom ist, wenn die fünfte Höchsttemperatur (TMax) des Moduls kleiner als ein erster Schwellwert (T_Imax) der Modultemperatur ist,
   - er gleich einer abnehmenden Funktion der fünften Höchsttemperatur des Moduls ist, wenn die fünfte Höchsttemperatur (TMax) des Moduls größer oder gleich dem ersten Schwellwert (T_Imax) der Modultemperatur und kleiner als ein zweiter Schwellwert (T3) der Modultemperatur ist, wobei die Werte dieser Funktion kleiner oder gleich dem vierten oberen Wert (Imax-de)

**EP 2 111 669 B1**

für den Endladestrom und größer oder gleich einem fünften unteren Wert (I_Tmax-de) für den Endladestrom sind,
- er andernfalls gleich dem fünften unteren Wert (I_Tmax-de) für den Endladestrom, positiv oder Null ist.

**9.** Batterie nach einem der Ansprüche 7 und 8, **dadurch gekennzeichnet, dass** die abnehmende Funktion der fünften Höchsttemperatur des Moduls linear ist.

**10.** Batterie nach einem der Ansprüche 3 bis 9, **dadurch gekennzeichnet, dass** die zweiten Mittel vorgesehen sind, um für den Entladestrom und/oder für den Regenerationsstrom gleichzeitig einen maximal zugelassenen Wert (laut-reg; laut-de) und einen maximal zulässigen Wert (lad-reg; lad-de) zu berechnen, wobei der maximale Grenzwert (laut-reg, lad-reg ; laut-de, lad-de) für den Entlade- und/oder den Regenerationsstrom des Pakets der größte der zwei Werte, der maximal zugelassene und der maximal zulässige, ist.

**11.** Batterie nach einem der vorhergehenden Ansprüche, **dadurch gekennzeichnet, dass** sie Mittel (25) zum Messen der Spannung jeder Zelle und/oder Mittel (26, 27) zum Messen der Temperatur jedes Moduls aufweist.

**12.** Batterie nach einem der vorhergehenden Ansprüche, **dadurch gekennzeichnet, dass** sie Mittel (26, 27) zum Messen der Modultemperatur in mindestens zwei verschiedenen Zonen des Moduls aufweist, wobei die gemessene Temperatur des Moduls die größte der Temperaturen (T1, T2) der Modulzonen ist.

**13.** Batterie nach einem der vorhergehenden Ansprüche, **dadurch gekennzeichnet, dass** das Übertragungsmittel eine Schnittstelle (39) mit einem Kommunikationsnetz (40) nach außen umfasst.

**14.** Batterie nach einem der vorhergehenden Ansprüche, **dadurch gekennzeichnet, dass** die Zellen durch Anordnungen dünner Folien realisiert sind.

**15.** Batterie nach einem der vorhergehenden Ansprüche, **dadurch gekennzeichnet, dass** die Zellen eine nominale Betriebstemperatur von mehr als 20 °C haben.

**16.** Batterie nach einem der vorhergehenden Ansprüche, **dadurch gekennzeichnet, dass** die Zellen des Typs Lithium-Metall-Polymer sind.

**17.** Batterie nach einem der vorhergehenden Ansprüche, **dadurch gekennzeichnet, dass** jedes Modul ferner mindestens ein Organ (33) zum Erwärmen seiner Zellen auf ihre nominale Betriebstemperatur von mehr als 20 °C aufweist.

**18.** Kraftfahrzeug, mit einer Antriebseinheit und mindestens einer Batterie nach einem der vorhergehenden Ansprüche, um mindestens vorübergehend die Antriebseinheit mit elektrischer Energie zu versorgen, **dadurch gekennzeichnet, dass** die Antriebseinheit eine Überwachungsvorrichtung (SVE) aufweist mit Mitteln (40, 41) zum Empfangen der Information über den maximalen Grenzwert (laut-reg, lad-reg; laut-de, lad-de) für den Entlade- und/oder den Regenerationsstrom des Pakets, die durch das Übertragungsmittel der Batterie versendet wird.

**Claims**

**1.** A battery including a pack of a plurality of modules, each containing a multiplicity of rechargeable cells (10) in series, the battery further including means (25, 26, 27) for measuring the voltage of at least one cell (10) and/or the temperature of at least one module,
**characterized in that** it includes:

- means for computing, based on the voltage and/or temperature measured by the measuring means (25, 26, 27) and on a recorded characteristic of the discharge current and/or regeneration current of the battery, a maximum discharge and/or regeneration current limit (laut-reg, lad-reg; laut-de, lad-de) of the pack,
- a transmission means for transmitting outside the information on the maximum discharge and/or regeneration current limit (laut-reg, lad-reg; laut-de, lad-de) of the pack.

**2.** The battery according to claim 1, **characterized in that** the modules are in series and the recorded current characteristics from the computing means relate to the modules in series.

**3.** The battery according to any of the preceding claims, **characterized in that**

➢ the battery includes:

• on each module, means (25) for measuring the voltage of several cells of the module, and/or
• means (26, 27) for measuring the temperature of several modules, and

➢ the computing means include:

• first means for computing, from the voltages and/or temperatures measured by the measuring means, at least one first extremal quantity, selected from:

- a first maximum cell voltage (VcellMaxPack),
- a second maximum module voltage (VmodMax),
- a third minimum cell voltage (VcellMinPack),
- a fourth minimum module voltage (VmodMin),
- a fifth maximum module temperature (TMax),

• second means for computing, as a maximum discharge and/or regeneration current limit (Iaut-reg, Iad-reg; Iaut-de, Iad-de) of the pack, at least one value from:

- a maximum authorized pack regeneration current value depending on the first and/or second maximum voltage (VcellMaxPack, VmodMax),
- a maximum authorized pack discharge current value depending on the third and/or fourth minimum voltage (VcellMinPack, VmodMin),
- a maximum admissible pack regeneration current value (Iad-reg) depending on the fifth maximum module temperature (TMax),
- a maximum admissible pack discharge current value (Iad-de) depending on the fifth maximum module temperature (TMax).

4. The battery according to claim 3, **characterized in that** each module (j) includes the first computing means, one of the modules is a master (1), while the other modules are slaves of the master module (1) so as to transmit to it said at least one first extremal quantity through a communications network (30) connecting the modules (j) with each other, the second computing means and the outward transmission means being provided on the master module (1).

5. The battery according to any of claims 3 and 4, **characterized in that** the maximum authorized regeneration current value (Iaut-reg) is computed by the second means, so that:

- it is equal to a first upper regeneration current value (I3reg) when the second maximum module voltage (VmodMax) is less than a first module voltage threshold (Vmod1),
- it is equal to a second intermediate regeneration current value (I2reg) when both the second maximum module voltage (VmodMax) is larger than or equal to the first module voltage threshold (Vmod1) and the first maximum cell voltage (VcellMaxPack) is less than a first cell voltage threshold (Vcell1),
- it is equal to a third lower regeneration current value (I1reg), when both the first maximum cell voltage (VcellMaxPack) is larger than or equal to the first cell voltage threshold (Vcell1) and less than a second cell voltage threshold (Vcell2), and the second maximum module voltage (VmodMax) is less than a second module voltage threshold (Vmod2),
- it is zero, when the first maximum cell voltage (VcellMaxPack) is larger than or equal to the second cell voltage threshold (Vcell2) or when the second maximum module voltage (VmodMax) is larger than or equal to the second module voltage threshold (Vmod2),

the first cell voltage threshold (Vcell1) being smaller than the second cell voltage threshold (Vcell2), and the first module voltage threshold (Vmod1) being smaller than the second module voltage threshold (Vmod2).

6. The battery according to any of claims 3 to 5, **characterized in that** the maximum authorized discharge current value (Iaut-de) is computed by the second means so that:

- it is equal to a first intermediate discharge current value (I1de), when both the fourth minimum module voltage (VmodMin) is larger than or equal to a third module voltage threshold (Vmod3) and less than a fourth module voltage threshold (Vmod4), and the third minimum cell voltage (VcellMinPack) is larger than or equal to a third cell voltage threshold (Vcell3) and less than a fourth cell voltage threshold (Vcell4),
- it is equal to a second upper discharge current value (I2de) when both the third minimum cell voltage (VcellMinPack) is larger than the fourth cell voltage threshold (Vcell4) and the fourth minimum module voltage (VmodMin) is larger than the fourth module voltage threshold (Vmod4),
- it is zero otherwise.

7. The battery according to any of claims 3 to 6, **characterized in that** the maximum admissible regeneration current value (Iad-reg) is calculated by the second means, so that

- it is equal to a fourth upper regeneration current value (Imax-reg), when the fifth maximum module temperature (TMax) is less than a first module temperature threshold (T_Imax),

- it is equal to a decreasing function of the fifth maximum module temperature, when the fifth maximum module temperature (TMax) is larger than or equal to the first module temperature threshold (T_Imax) and less than a second module temperature threshold (T3), the values of this function being less than or equal to the fourth upper regeneration current value (Imax-reg) and larger than or equal to a fifth lower regeneration current value (I_Tmax-reg),

- it is otherwise equal to the fifth lower regeneration current value (I_Tmax-reg), either positive or zero.

8. The battery according to any of claims 3 to 7, **characterized in that** the maximum admissible discharge current value (Iad-de) is computed by the second means, so that

- it is equal to a first upper discharge current value (Imax-de), when the second maximum module temperature (TMax) is less than a first module temperature threshold (T_Imax),

- it is equal to a decreasing function of the fifth maximum module temperature, when the fifth maximum module temperature (TMax) is larger than or equal to the first module temperature threshold (T_Imax) and less than a second module temperature threshold (T3), the values of this function being less than or equal to the fourth upper discharge current value (Imax-de) and larger than or equal to a fifth lower discharge current value (I_Tmax-de),

- it is otherwise equal to the fifth lower discharge current value (I_Tmax-de), either positive or zero.

9. The battery according to any of claims 7 and 8, **characterized in that** the decreasing function of the fifth maximum module temperature is linear.

10. The battery according to any of claims 3 to 9, **characterized in that** the second means are provided for computing, for the discharge current and/or the regeneration current, both a maximum authorized value (Iaut-reg; Iaut-de) and a maximum admissible value (Iad-reg; Iad-de), the maximum discharge and/or regeneration current limit (Iaut-reg, Iad-reg; Iaut-de, Iad-de) of the pack being the largest of both the maximum authorized value and the maximum admissible value.

11. The battery according to any of the preceding claims, **characterized in that** it includes means (25) for measuring the voltage of each cell and/or means (26, 27) for measuring the temperature of each module.

12. The battery according to any of the preceding claims, **characterized in that** it includes means (26, 27) for measuring the module temperature in at least two different zones of the module, the measured temperature of the module being the largest of the temperatures (T1, T2) of the zones of the module.

13. The battery according to any of the preceding claims, **characterized in that** the transmission means comprises an interface (39) with a network (40) for communication to the outside.

14. The battery according to any of the preceding claims, **characterized in that** the cells are made by assemblies of thin films.

15. The battery according to any of the preceding claims, **characterized in that** the cells have a nominal operating temperature above 20°C.

16. The battery according to any of the preceding claims, **characterized in that** the cells are of the lithium-metal-polymer type.

17. The battery according to any of the preceding claims, **characterized in that** each module further includes at least one unit (33) for heating its cells to their nominal operating temperature above 20°C.

18. A motor vehicle, including a traction motor drive and at least one battery according to any of the preceding claims, for supplying at least temporarily the traction motor drive with electric power, **characterized in that** the traction motor drive includes a supervisor (SVE) having means (40, 41) for receiving information on the maximum discharge and/or regeneration current limit (Iaut-reg, Iad-reg; Iaut-de, Iad-de) of the pack, sent by the transmission means of the battery.

## FIG.1

## FIG.2

FIG.3

```
              ┌──────────┐
              │  Début   │
              └────┬─────┘
                   ▼
        ┌──────────────────┐
        │        E1        │
        └────────┬─────────┘
                 ▼
        ┌──────────────────┐
        │      i = m       │── E2
        └────────┬─────────┘
                 ▼
        ┌──────────────────┐
        │        Vi        │── E3
        └────────┬─────────┘
                 ▼
            ◇ Vi
      E4 ─ ◇  <        ── non
            ◇ Vcell min
            ◇   ?
                 │ oui
                 ▼
   E5 ─┌──────────────────┐
       │  Vcell min = Vi  │
       └────────┬─────────┘
                 ▼
            ◇ Vi
      E6 ─ ◇  >        ── non
            ◇ Vcell max
            ◇   ?
                 │ oui
                 ▼
   E7 ─┌──────────────────┐
       │  Vcell max = Vi  │
       └────────┬─────────┘
                 ▼
        ┌──────────────────┐
        │     i = i-1      │── E8
        └────────┬─────────┘
                 ▼
      E9 ─ ◇ i = 1 ? ── non
                 │ oui
                 ▼
        ┌──────────────────┐
        │      Vmod        │── E10
        └────────┬─────────┘
                 ▼
        ┌──────────────────┐
        │                  │── E11
        └────────┬─────────┘
                 ▼
              ┌──────────┐
              │   Fin    │
              └──────────┘
```

## FIG.4

```
          Début
            │
            ▼
     ┌─────────────┐
     │    E21      │
     └─────────────┘
            │
            ▼
     ┌─────────────┐
     │    j = n    │──── E22
     └─────────────┘
            │
            ▼
     ┌─────────────┐
     │             │──── E23
     └─────────────┘
            │
            ▼
     ┌─────────────┐
     │ VcellMin j  │──── E24
     │ VcellMax j, Vmod j │
     └─────────────┘
            │
            ▼
        ◇ VcellMin j
          <            ── non ──┐
          VcellMinPack          │
          ?    ── E25           │
          │                     │
         oui                    │
          ▼                     │
E26 ──┌─────────────────────┐   │
      │ VcellMinPack=VcellMin j │  │
      └─────────────────────┘   │
            │◄──────────────────┘
            ▼    E27
        ◇ VcellMax j
          >            ── non ──┐
          VcellMaxPack          │
          ?                     │
          │                     │
         oui    E28             │
          ▼                     │
      ┌─────────────────────┐   │
      │ VcellMaxPack=VcellMax j │  │
      └─────────────────────┘   │
            │◄──────────────────┘
            ▼
          (E29)
```

```
         E29
          │
          ▼
     ◇ VMod j
       <            ── non ──┐
       VmodMin               │
       ?                     │
       │                     │
      oui    E30             │
       ▼                     │
   ┌────────────────┐        │
   │ VmodMin = Vmod j │      │
   └────────────────┘        │
       │◄───────────────────┘
       ▼
E31 ─◇ Vmod j
       >            ── non ──┐
       VmodMax               │
       ?                     │
       │                     │
      oui                    │
       ▼                     │
E32 ─┌────────────────┐      │
     │ VmodMax = Vmod j │    │
     └────────────────┘      │
       │◄───────────────────┘
       ▼
E33 ─┌────────────────┐
     │    j = j-1     │
     └────────────────┘
       │
       ▼
E34 ─◇ j = 0 ?  ── non ──► (E24)
       │
      oui
       ▼
   ┌────────────────┐
   │                │──── E35
   └────────────────┘
       │
       ▼
   ┌────────────────┐
   │                │──── E36
   └────────────────┘
       │
       ▼
     Fin
```

# FIG.5

**Début**

E41 — Iaut-reg = I3reg

E42 — VmodMax >= Vmod 1 ?
  — non
  — oui

E43 — Iaut-reg = I2reg

E44 — VcellMaxPack >= Vcell 1 ?
  — non
  — oui

E45 — Iaut-reg = I1reg

E46 — VmodMax >= Vmod 2 ?
  — non
  — oui

E48 — VcellMaxPack >= Vcell 2 ?
  — non

E47 — Iaut-reg = 0

E49

E35

E49 — Iaut-de = 0

E50 — VmodMin >= Vmod 3 ?
  — non
  — oui

E51 — VcellMinPack >= Vcell 3 ?
  — non
  — oui

E52 — Iaut-de = I1de

E53 — VmodMin >= Vmod 4 ?
  — non
  — oui

E54 — VcellMinPack >= Vcell 4 ?
  — non
  — oui

E55 — Iaut-de = I2de

**Fin** — E56

20

## FIG.6

## FIG.7

FIG10

FIG.8

## FIG.9

## RÉFÉRENCES CITÉES DANS LA DESCRIPTION

**Documents brevets cités dans la description**

- US 5773962 A
- US 5204611 A
- US 2005077878 A
- US 2006028183 A